Europäisches Patentamt

European Patent Office

Office européen des brevets

(11) Veröffentlichungsnummer: **0 323 956**
**B1**

(12) **EUROPÄISCHE PATENTSCHRIFT**

(45) Veröffentlichungstag der Patentschrift: **22.11.90**

(21) Anmeldenummer: **87904849.4**

(22) Anmeldetag: **08.08.87**

(86) Internationale Anmeldenummer:
**PCT/DE87/00348**

(87) Internationale Veröffentlichungsnummer:
**WO 88/02108 24.03.88 Gazette 88/07**

(51) Int. Cl.⁵: **G 01 L 23/22,** G 01 H 11/08,
H 01 T 13/40

(54) **ZÜNDKERZE MIT EINER MESSVORRICHTUNG.**

(30) Priorität: **13.09.86 DE 3631243**

(43) Veröffentlichungstag der Anmeldung:
**19.07.89 Patentblatt 89/29**

(45) Bekanntmachung des Hinweises auf die
Patenterteilung:
**22.11.90 Patentblatt 90/47**

(84) Benannte Vertragsstaaten:
**DE FR SE**

(56) Entgegenhaltungen:
**DE-A-3 213 428**
**US-A-3 020 763**
**US-A-4 169 388**

**Patent Abstracts of Japan, Band 10, Nr 57
(P-434)(2114), 7 März 1986 & JP A 60201231
Patent Abstracts of Japan, Band 9, Nr. 334
(P-417)(2057), 27 Dezember 1985 & JP A
60158322**

(73) Patentinhaber: **ROBERT BOSCH GMBH
Postfach 50
D-7000 Stuttgart 1 (DE)**

(72) Erfinder: **BRÜGGEN, Gerhard
Löwenstr. 95
D-7000 Stuttgart 70 (DE)**
Erfinder: **KEIPER, Winfried
Schwabstr. 15
D-7015 Korntal-Münchingen (DE)**
Erfinder: **STEINKE, Leo
Haldenäcker 39
D-7050 Waiblingen-Hegnach (DE)**

Courier Press, Leamington Spa, England.

## Beschreibung

### Stand der Technik

Die Erfindung geht aus von einer Zündkerze mit einer Meßvorrichtung nach der Gattung des Hauptanspruchs. Bei einer derartigen z.B. aus der US—A—4169388 oder der DE—A1—3662312 bekannten Zündkerze ist innerhalb des Gehäuses der Zündkerze eine Druckmeßvorrichtung angeordnet, die mit dem Brennraum verbunden ist. Damit kann aber nur der Verbrennungsgasdruck bestimmt werden. Auftretende Beschleunigungen müssen kompensiert werden, da sie das Meßsignal verfälschen würden. Ferner ist es bekannt, an der Zündkerze Sensoren zur Bestimmung des Klopfens anzubringen. Diese Sensoren sind aber so ausgestaltet, daß sie schmalbandige Schwingungen aufnehmen und entsprechende elektrische Signale abgeben. Diese Sensoren messen selektiv den schmalen Bereich, in dem Klopfen auftritt. Überwacht wird auch hier nur der Ablauf des Verbrennungsvorgangs. Die Bewegung von mechanischen Teilen, wie Ventile, Kolben, etc. kann nicht bestimmt werden. Deren Bewegung wurde bisher individuell durch am jeweiligen mechanischen Teil angeordnete Sensoren gemessen.

Aus der DE—A1 32 13 428 ist eine Zündkerze mit integriertem Drucksensor zum Erfassen des Druckverlaufs im Zylinder eine Brennkraftmaschine, insbesondere von Klopfgeräuschen beim Verbrennungsvorgang beschrieben. Im Bereich der Dichtung, die das Gehäuse gegenüber dem Isolationskörper de Zündkerze abdichtet, sind zwei Kontaktelektroden ausgebildet. Die Dichtung befindet sich zwischen den beiden Kontaktelektroden und besteht aus einem Material, das bei Druckänderung seine elektrische Leitfähigkeit verändert. Der Meßwert de elektrischen Leitfähigkeit der Dichtung ist proportional zum Druck im Zylinder. Auch hier werden die Klopfvorgänage nur mit Hilfe eines Druckaufnehmers übverwacht. Die Bewegung de mechanischen Teile ist individuell durch am jeweiligen mechanischen Teil zusätzlich angeordnete Sensoren zu bestimmen.

### Vorteile der Erfindung

Die erfindungsgemäße Zündkerze mti den kennzeichnenden Merkmalen des Hauptanspruchs hat demgegenüber den Vorteil, daß der Sensor nur die durch die Verbrennung und die mechanisch bewegten Teile des Motors, wie z.B. Kolben, Ventile und Lagerspiel, hervorgerufenen Bewegungen mißt. Die Vorgänge im Brennraum selbst werden nicht bestimmt. Während bei bisherigen Vorrichtungen versucht wurde, die Vorgänge im Brennraum zu bestimmen, soll de Sensor die Bewegung der mechanischen Teile überwachen. Die durch deren Bewegung hervorgerufenen Schwingungen bzw. Beschleunnigungen werden auf den Motorblock übertragen und vom Sensor bestimmt. Es ist bekannt, welche Teile in welchem Frequenzbereich schwingen. Verändern sich die aufgenommenen Signale, so können Rückschlüsse auf den Betriebszustand der Brennkraftmaschine gemacht werden. Mit Hilfe eines breitbandigen Sensors kann ein größer Bereich erfaßt werden, so daß eine große Anzahl an Teilen überwacht wird. Aus der Frequenz der aufgenommenen Signale sind Rückschlüsse auf das überwachte Teil und dessen Veränderung möglich. Bei Verwendung eines breitbandigen Schwingungsaufnehmers (bis ca. 200 kHz) ist eine hohe zeitliche auflösung der einzelnen aufgenommenen Signale möglich. Der Betreibszustand und die Funktion des Motors kann sowohl kontinuierlich während der Fahrt als auch bei Überprüfungen in de Werkstatt kontrolliert werden. Der Sensor ist fest in einer Bohrung im Gehäuse der Zündkerze angeordnet, so daß er eine gewisse Schüttelfestigkeit aufweist, d.h. er kann bei im Betrieb auftretenden Belastungen seine Position nicht verändern und dadurch keine Fehlmessungen hervorrufen. Aufgrund der unsymmetrischen Anordnung der Mittelbohrung der Zündkerze mit dem Isolatorkörper sind keine äußeren baulichen Verändeungen am Gehäuse der Zündkerze notwendig, so daß die Zündkerze problemlos in bisherige Anordnungen einbaubar ist. Dadurch ergibt sich genügend Bauraum für den Sensor im Gehäuse de Zundkerze. Nur durch Austausch der Zündkerze mit und ohne Sensor ist der Motor bei gleichbleibender Ausbildung umrüstbar. Es ist nicht mehr für jedes Teil ein eigener Sensor notwendig, der noch dazu nicht austauschbar ist.

Durch die in den Unteransprüchen aufgeführten Maßnahmen sind eine vorteilhafte Weiterbildung und Verbesserung der im Hauptanspruch angegebenen Merkmale möglich.

### Zeichnung

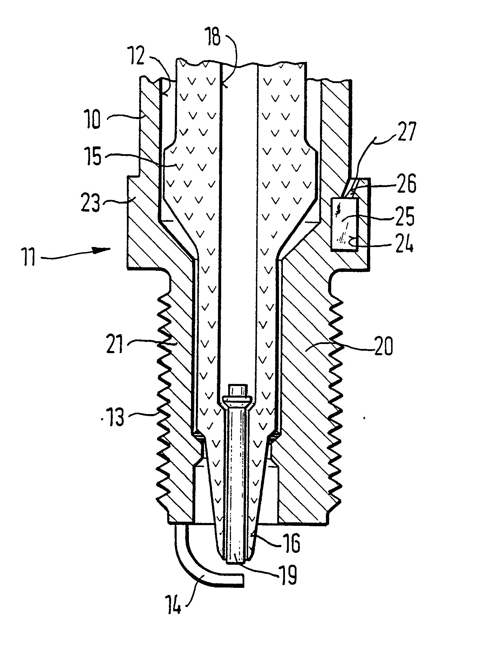

Ein Ausführungsbeispiel der Erfindung ist in der Zeichnung dargestellt und in der nachfolgenden Beschreibung näher erläutert. Die einzige Figur zeigt einen Längsschnitt durch eine Zündkerze mit einegebautem Sensor.

### Beschreibung des Ausführungsbeispiels

Im Gehäuse 10 einer Zündkerze 11 ist eine außermittige Längsbohrung 12 ausgebildet. Das Gehäuse 10 ist mit Hilfe eines Außengewindes 13 in herkömmlich bekannter Weise in einen Motorblock einschraubbar. Das Gehäuse 10 läuft an seinem brennraumseitigen Ende in eine Masseelektrode 14 aus. In der Längsbohrung 12 ist ein Isolatorkörper 15 angeordnet, desen Isolatorfüßspitze 16 der Masseelektrode 14 zugewandt ist. Verner weist der Isolatorkörper 15 eine mittige Längbohrung 18 auf, in der ein hier nicht dargestellter Anschlußbolzen und eine Mittelelektrode 19 angeordnet ist. Die Mittelelektrode 19 und die Masseelektrode 14 bilden zusammen die Funkenstrecke für die Zündkerze 11.

Aufgrund der außermittigen Anordnung der Längsbohrung 12 ergeben sich Gehäuseteile mit einer dicken 20 und einer dünnen Wandstärke 21. Im Bereich der Stauch- und Warmschrumpfzone 23 des Gehäuses 10, die sich an das Gewinde 13 anschließt, ist im Gehäuseteil 20 mit der dickeren Wandstärke eine Ausnehmung 24 ausgebildet. In diese Ausnehmung 24 ist ein Sensor 25 angeordnet. Über eine Bohrung 26 führen die elektrischen Anschlüsse 27 des Sensors 25 nach außen zu einer nicht dargestellten elektronischen Auswerteschaltung, in der das Meßsignal ausgewertet wird.

Der Sensor 25 kann ein herkömmlich bekannter Sensor mit piezoelektrischen Elementen oder auch mit piezoresistiven oder elektrodynamischen Elementen sein. Wichtig ist bei der Auswahl des Sensors 25, daß er die durch die mechanischen Teile auf den Motorblock übertragenen Bewegungen bestimmt. Der Sensor 25 soll ein möglichst breitbandiges Resonanzspektrum aufweisen und Frequenzen bis ca. 200 kHz aufnehmen können. Als besonders vorteilhaft erweist sich ein Sensor, der den Piezo-Effekt nutz, z.B. aus Keramik besteht.

Die Zündkerze 10 und der Sensor 25 bilden zusammen eine kompakte Einheit, die leicht austauschbar ist und ohne Verändeungen am Motorblock einbaubar ist. Es ist nicht mehr notwendig, an den Ventilen oder an den Kolben jeweils eigene, berührungslose Sensoren anzubauen.

Besonders vorteilhaft ist es, daß die Längsbohrung 12 außermittig ausgebildet ist und somit ein Gehäuseteil 20 mit einer dickeren Wand entsteht, in der zusätzlicher Bauraum für den Sensor 25 entsteht.

Die Funktion einer Zündkerze ist hinreichend bekannt und deshalb hier nicht näher erläutert.

## Patentansprüche

1. Zündkerze (11) mit einer durchgehenden Längsbohrung (12) für den Isolatorkörper (15) und einer innerhalb ihres Gehäuses (10) angeordneten Meßvorrichtung (25), dadurch gekennzeichnet, daß die Meßvorrichtung ein Bewegungsaufnehmer (25) ist, der im Bereich der Stauch- und Warmschrumpfzone (23) des Gehäuses (10) angeordnet ist und der die durch die mechanisch bewegten Teile des Motors, insbesondere Kolben, Ventile und Lagerspiel, hervorgerufenen Bewegungen bestimmt.

2. Zündkerze nach Anspruch 1, dadurch gekennzeichnet, daß die Längsbohrung (12) außermittig ausgebildet ist und der Bewegungsaufnehmer (25) im dickeren Teil (20) des Gehäuses (10) angeordnet ist.

3. Zündkerze nach Anspruch 1 und/oder 2, dadurch gekennzeichnet, daß sich im dickeren Teil (20) des Gehäuses (10) im Bereich der Stauch- und Warmschrumpfzone (23) eine Ausnehmung (24) befindet, in der der Bewegungsaufnehmer (25) angeordnet ist.

4. Zündkerze nach einem der Ansprüche 1 bis 3, dadurch gekennzeichnet, daß der Bewegungsaufnehmer (25) ein Schwingungsaufnehmer mit breitbandigem Meßbereich ist.

5. Zündkerze nach einem der Ansprüche 1 bis 4, dadurch gekennzeichnet, daß der Bewegungsaufnehmer (25) ein piezoelektrisches Element aufweist.

## Revendications

1. Bougie d'allumage avec un alésage longitudinal passant (12) pour le corps isolant (15) et un dispositif de mesure (25) placé à l'intérieur du culot (10), caractérisée en ce que le dispositif de mesure est un capteur de mouvement (25), qui est disposé dans le domaine de la zone de pressage et de serrage à chaud (23) du culot (10) et qui détermine les mouvements engendrés par les pièces mécaniques en mouvement du moteur en particulier pistons, soupapes et jeu de palier.

2. Bougie d'allumage selon la revendication 1, caractérisée en ce que l'alésage longitudinal (12) es réalisé excentré et le capteur de mouvement (25) est placé dans la partie plus épaisse (20) du culot (10).

3. Bougie d'allumage selon la revendication 1 et/ou la revendication 2, caractérisé en ce qu'il existe dans la partie plus épaisse (20) du culot (10) dans le domaine de la zone pressage et de serrage à chaud (23) un évidement (24), dans lequel est disposé le capteur de mouvement (25).

4. Bougie d'allumage selon une des revendications 1 à 3, caractérisée en ce que le capteur de mouvement (25) est un capteur de vibration avec un domaine de mesure à bande large.

5. Bougie d'allumage selon une des revendications 1 à 4, caractérisé en ce que le capteur de mouvement (25) comprend un élément piézoélectrique.

## Claims

1. Spark plug (11) having a longitudinal through bore (12) for the insulating element (15) and a measurement device (25) arranged within its housing (10), characterized in that the measurment device is a motion pick-up (25) which is arranged in the region of the upsetting and heat-shrinkage zone (23) of the housing (10) and determines the movements caused by the mechanically moved parts of the engine, in particular pistons, valves and play in the bearings.

2. Spark plug according to Claim 1, characterized in that the longitudinal bore (12) is formed eccentrically and the motion pick-up (25) is arranged in the thicker portion (20) of the housing (10).

3. Spark plug according to Claim 1 and/or 2, characterized in that in the thicker portion (20) of the housing (10), in the region of the upsetting and heat-shrinkage zone (23), there is a recess (24) in which the motion pick-up (25) is arranged.

4. Spark plug according one of Claims 1 to 3, characterized in that the motion pick-up (25) is a vibration pick-up having a wide-band measurement range.

5. Spark plug according to one of Claims 1 to 4, characterized in that the motion pick-up (25) has a piezoelectric element.